# EUROPÄISCHE PATENTSCHRIFT

(11) **EP 1 017 502 B1**
(45) Veröffentlichungstag und Bekanntmachung des Hinweises auf die Patenterteilung: **13.06.2001**
(21) Anmeldenummer: 98954220.4
(22) Anmeldetag: 24.09.1998
(51) Int. Cl.: B03B 9/06, C03B 5/00

(54) **VERFAHREN ZUR VERWERTUNG VON ALTAUTOS**
PROCESS FOR RECYCLING OLD CARS
PROCEDE POUR REVALORISER DES AUTOMOBILES USAGEES

(30) Priorität: 24.09.1997 DE 19742214
(43) Veröffentlichungstag der Anmeldung: 12.07.2000
(73) Patentinhaber: FPR HOLDING AG, 9056 Gais (CH)
(72) Erfinder: RITTER, Jürgen, CH-9056 Gais (CH)
(74) Vertreter: Lins, Edgar, Dipl.-Phys. Dr.jur.
(86) Internationale Anmeldenummer: DE9802846
(87) Internationale Veröffentlichungsnummer: WO9915277

(56) Entgegenhaltungen:
- DE-A- 4 238 164
- DE-A- 4 426 503
- DE-A- 4 437 852
- DE-B- 2 436 549
- US-A- 5 443 157
- US-A- 5 619 934

## Beschreibung

Die Erfindung betrifft ein Verfahren zur Verwertung von Altautos durch Zerkleinern und thermische Behandlung der Schredder-Leichtfraktion (Resh).

Aufgrund der in Altautos enthaltenen Stoffvielfalt ist die Beseitigung von Altautos immer problematisch gewesen. Bekanntlich werden Altautos zunächst geschreddert. Die Entsorgung der Schredder-Leichtfraktion (Resh) ist problematisch, weil das Deponieren des Resh zu einer Gefährdung des Grundwassers aufgrund der in den Reststoffen enthaltenen Schwermetalle mit sich bringen würde. Es sind daher thermische Verfahren bekanntgeworden, die so ausgelegt sind, daß die im Resh enthaltenen inerten Stoffe, wie SiO₂, Al₂O₃ und CaO und Metalle, soweit sie nicht schon vorher weitgehend auf mechanischem Weg aus dem Resh ausgeschieden wurden, eingeschmolzen werden. Aus den im Resh enthaltenen organischen Stoffen wird Synthesegas gewonnen, das vor allem zur Herstellung von elektrischer Energie genutzt wird.

Es ist ferner bekannt, Resh einer Pyrolyse unter Sauerstoffabschluß zu unterwerfen. Der aus dem Reaktor ausgetragene Pyrolysekoks enthält die Metalle und interten Stoffe des Resh. Die Metalle, wie Eisen, Kupfer und Nickel werden vom Pyrolysekoks getrennt und als verhüttungsfähige Stoffe zurückgewonnen. Der Koks wird zusammen mit den inerten Stoffen, wie SiO₂, Al₂O₃ und CaO einer Schmelzkammer zugeführt. In dieser werden die inerten Stoffe mit Erdgas, das mit reinem Sauerstoff stöchiometrisch verbrannt wird, eingeschmolzen. Durch Wasserkühlung wird aus der abgezogenen Schmelze ein glasähnliches Granulat gewonnen. Bei diesem Prozeß entsteht in der Schmelzkammer zugleich Synthesegas, das CO und H₂ enthält. In diesem Prozeß können die leichtflüchtigen Schwermetalle Zink, Blei und Cadmium nicht als Mischmetalle zurückgewonnen werden. Sie gehen wie Schwefel und Chlor in verschiedenen Verbindungen ins Synthesegas, aus dem sie vor dessen Verstromung ausgeschieden werden müssen. Die Handhabung der abgeschiedenen Schadstoffe ist unklar und dürfte eine Gasreinigung erfordern, bei der üblicherweise zu deponierende Rückstände entstehen.

Es ist ferner vorgeschlagen worden, in einem ersten Schritt die Metalle aus dem Resh auszusortieren und einer Wiederverwertung zuzuführen. In mehreren mechanischen Trennstufen fallen außer den Metallfraktionen verschiedene mineralische und organische Fraktionen an. Die nur schwach beladenen organischen Fraktionen werden in einem Schacht zu Synthesegas vergast, aus dem über Gasmotoren elektrische Energie gewonnen wird. Die beim Trennen anfallenden, stärker mit Schadstoffen kontaminierten organischen und die mineralischen Fraktionen werden in einem Schmelzofen mit Primärenergie eingeschmolzen, und aus der Schmelze wird ein glasähnliches Granulat gewonnen. Bei diesem zweistufigen Prozeß müssen das Synthesegas und das oxidische Abgas aus dem Schmelzprozeß getrennt voneinander gereinigt werden. Dabei anfallende Rückstände werden deponiert.

Alternativ zu der Herstellung des Granulats ist vorgeschlagen worden, die Vergasung von zerkleinertem Resh in einem Wirbelschichtreaktor vorzunehmen und die aus ihm abgezogenen Feststoffe anschließend in einem reduzierend gefahrenen Metallbadreaktor zu behandeln, um Schwermetalle abzureichern und als Metallschmelze abzuziehen. Die inerten Stoffe können dann als Zementzumahlstoff aufbereitet und verwendet werden.

Alle bekannten Verfahren erfordern einen hohen Energieeinsatz für die Herstellung der Schmelzen, aus denen verschiedene mehr oder weniger verwendbare Produkte gewonnen werden. Darüber hinaus fallen aus der Gasreinigung meist Rückstände an, die deponiert werden.

Der vorliegenden Erfindung liegt die Problemstellung zugrunde, ein Verfahren der eingangs erwähnten Art so zu verbessern, daß eine verbesserte Energiebilanz erzielt wird und daß eine Belastung der Umwelt weitgehend vermeidbar ist.

Ausgehend von dieser Problemstellung ist erfindungsgemäß ein Verfahren der eingangs erwähnten Art dadurch gekennzeichnet, daß während oder nach der Zerkleinerung metallische Bestandteile aussortiert werden, daß eine Feinzerkleinerung der übrigen Stoffe auf eine Länge von etwa 2 mm oder darunter vorgenommen wird und daß die feinzerkleinerten Stoffe in einem Schmelzreaktor (16) durch die inhärente Energie geschmolzen und durch Abkühlung zu einem ungefährlichen Feststoff umgewandelt werden. Das erfindungsgemäße Verfahren erlaubt die Verwertung von Resh praktisch ohne externe Energiezufuhr, da die im Resh enthaltene Energie zur Durchführung der Schmelzung, vorzugsweise mit einem Schmelzzyklon, benutzt wird.

Vorzugsweise wird dabei das Abgas unter Wärmerückgewinnung abgekühlt und wird anschließend in einem Absorber mit regenerierbarem Absorptionsmaterial zur Produktion verwertbarer Säuren aufbereitet.

Das erfindungsgemäße Verfahren erlaubt dadurch die vollständige Vermeidung von nicht verwertbaren Reststoffen und die Gewinnung von im Resh enthaltener Energie als verwertbare Energie.

In einer besonders bevorzugten Ausführungsform wird die im Resh enthaltene Energie dazu benutzt, toxische Abfallstäube, insbesondere KVA-Filterstäube (Filterstäube einer Müllverbrennungsanlage) und ggf. Stahlfilterstäube zusammen mit dem Resh zu verarbeiten und unschädlich zu machen. Dabei können die toxischen Stäube zu einem nicht eluierbaren Granulat mit eingeschmolzen werden oder zusammen mit dem Resh so behandelt werden, daß die toxischen Bestandteile zu wiederverwertbaren Materialien konvertiert werden.

Die Erfindung wird im folgenden anhand der in der Zeichnung dargestellten Ausführungsbeispiele näher erläutert. Es zeigen:
- Figur 1 -: ein schematisches Diagramm zur im wesentlichen mechanischen Vorbereitung der verwendeten Ausgangsstoffe
- Figur 2 -: ein schematisches Diagramm für die Schmelzbehandlung der Ausgangsstoffe und der energetischen und stofflichen Behandlung der Abgase
- Figur 3 -: eine schematische Zusammenfassung des erfindungsgemäßen Verfahrens in einer ersten Ausbaustufe
- Figur 4 -: eine schematische Darstellung des erfindungsgemäßen Verfahrens in einer zweiten Ausbaustufe.

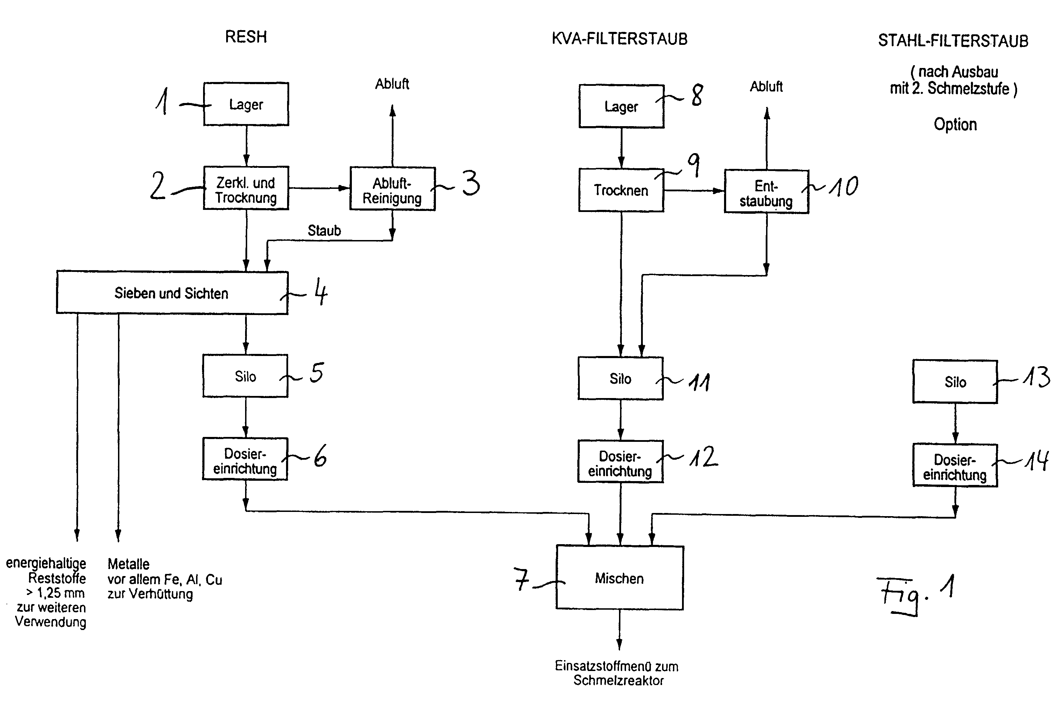

Figur 1 verdeutlicht im linken Teil die Aufbereitung von Resh, also vorzerkleinerten Altautoteilen. Der Resh wird in einem Lager 1 gelagert und aus diesem zu einer Zerkleinerungs- und Trocknungsstufe 2 transportiert, wo die Zerkleinerung und Trocknung in einem Prozeßschritt, vorzugsweise in einem Prallreaktor, geschieht. Der dabei entstehende Staub wird abgesaugt und in einem Staubfilter einer Abluftreinigungsstufe 3 aufgefangen, so daß gereinigte Abluft ins Freie gelangt. Der Staub aus dem Staubfilter der Abluftreinigungsstufe 3 gelangt zusammen mit dem getrockneten und fein zerkleinerten Resh in eine Sieb- und Sichtungsstufe 4. Das durch eine Maschenweite von 1,25 mm hindurchpassende Feinmaterial gelangt in ein Silo 5 zur erfindungsgemäßen weiteren Verarbeitung. Die größeren Teile werden nach Metallen und Nichtmetallen getrennt. Die größeren Metallstücke, insbesondere aus Eisen, Aluminium und Kupfer können der Verhüttung zugeführt werden. Größere Stücke aus anderem Material fallen nur in geringen Mengen an und werden als energiehaltige Reststoffe verwertet oder separat auf < 1,25 mm ø zerkleinert und dem Silo 5 zugeführt.

Die hier interessierenden feinzerkleinerten Reshanteile gelangen aus dem Silo 5 über eine Dosiereinrichtung 6 in eine Mischstufe 7.

Erfindungsgemäß wird auch KVA-Filterstaub aufbereitet, indem er aus einem Lager 8 in eine Trocknungsstufe 9 transportiert wird. Die Trocknungsluft wird in einer Entstaubungsstufe 10 vom Staub befreit und gelangt als Abluft ins Freie. Der Staub aus der Entstaubungsstufe 10 gelangt mit dem getrockneten Staub aus der Trocknungsstufe 9 in einen Silo 11, von wo der Filterstaub über eine Dosiereinrichtung 12 der Mischstufe 7 zugeführt werden kann.

Als weitere Option kann auch Stahl-Filterstaub aus einem Silo 13 über eine Dosiereinrichtung 14 der Mischstufe 7 zugeführt werden.

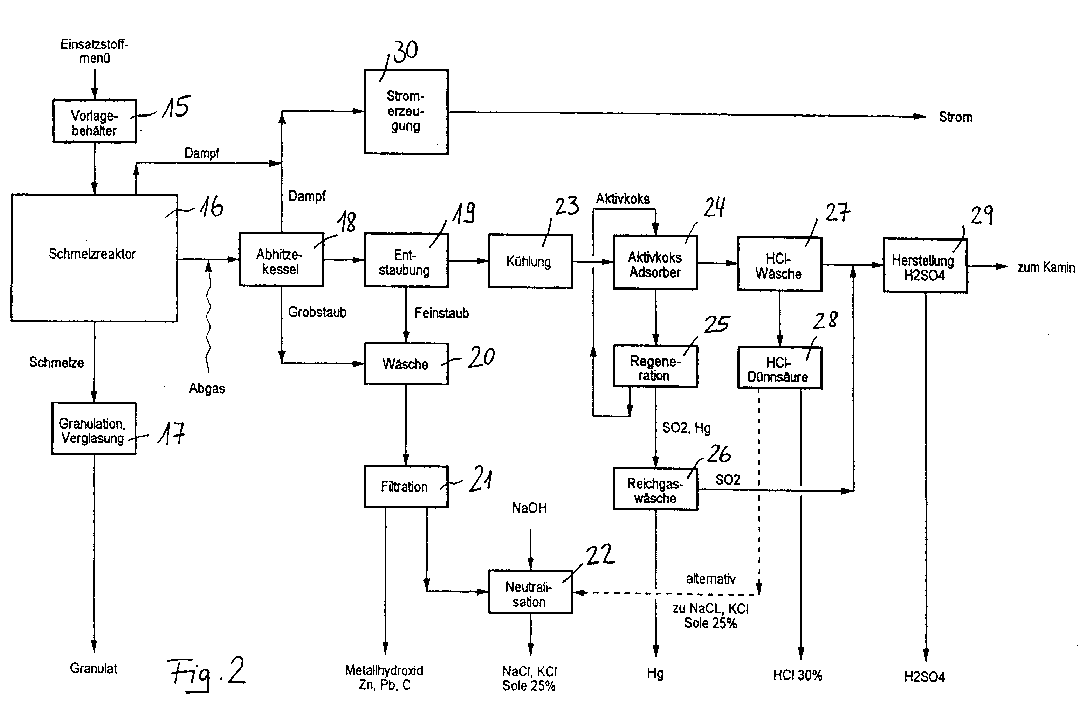

Figur 2 verdeutlicht, daß das gemischte Material am Ausgang der Mischstufe 7 in einen Vorlagebehälter 15 gelangt, von dem aus es in einen Schmelzreaktor 16 gebracht wird. In dem Schmelzreaktor 16 finden exotherme Umsetzungen statt, die die Arbeitstemperatur des Schmelzreaktors aufrechterhalten können.

Der Schmelzreaktor 16 ist vorzugsweise als Schmelzzyklon ausgebildet, in den die Einsatzstoffe tangential eingeblasen werden. Dabei findet ein extrem schneller Wärmeübergang von dem Resh auf die Filterstäube statt, wobei bei den sich einstellenden hohen Temperaturen von 1800° und darüber in dem Einsatzstoffgemisch enthaltene Stoffverbindungen vollständig dissoziiert werden. Die flüchtigen Bestandteile, wie Schwefel, Chlor und die leichtflüchtigen Schwermetalle, wie Zink, Blei, Cadmium und Quecksilber, werden mit dem Abgas abtransportiert.

Die im Resh enthaltene Überschußenergie wird soweit wie möglich für die Einschmelzung der Filterstäube genutzt. Bevorzugt ist eine leicht reduzierende Arbeitsweise des Schmelzreaktors 16.

Dabei entstehendes Gas (mit H₂ und CO) kann wegen seiner Brennbarkeit nachverbrannt werden.

Aus der Schmelze am Ausgang des Schmelzreaktors 16 wird durch Abkühlung in einer Granulationsstufe 17 ein glasartiges, nicht eluierbares Granulat erzeugt, in dem die im Resh und in den Filterstäuben noch enthaltenen restlichen Schwermetalle eingeschlossen und somit ungefährlich gemacht worden sind.

Das Abgas aus dem Schmelzreaktor gelangt in einen Abhitzekessel 18, in dem bereits Grobstaub abgeschieden wird. Das im Abhitzekessel 18 abgekühlte Abgas gelangt in eine Entstaubungsstufe 19 zur Abscheidung von Feinstaub. Der Staub wird gewaschen. In der Wäsche gehen die Chloride aus den Chlorverbindungen mit Zink, Blei und Cadmium in Lösung. Durch Filtration und Neutralisation der Lösung durch NaOH erhält man einerseits Metallhydroxide und andererseits NaCl- bzw. KCl-Sole.

Das aus der Entstaubungsstufe 19 austretende Abgas gelangt über eine Kühlungsstufe 23 in einen Adsorber 24, der mit einem Gegenstrom-Koksbett aus Aktivkoks ausgebildet ist. Durch den Aktivkoks 24 werden aus dem Abgas insbesondere Quecksilber, aber auch Dioxine und Furane herausgefiltert und auf dem Aktivkoks angelagert. Der Aktivkoks 24 ist von Zeit zu Zeit an der Unterseite austragbar. Der Aktivkoks 24 adsorbiert auch SO₂-Anteile im Abgas. Aufgrund der hohen SO₂-Konzentration wird der Adsorber 24 jedoch für SO₂ zweckmäßigerweise im Durchbruchbetrieb gefahren, so daß SO₂ überwiegend den mit H₂SO₄ gesättigten Adsorber 24 durchläuft und anschließend verarbeitet werden.

In einer Regenerationsstufe 25 für den beladenen Aktivkoks werden die Beladungsstoffe H₂SO₄ und Quecksilber wieder von dem Aktivkoks entfernt, wobei eine Temperatur von ca. 600 °C verwendet wird. Bei dieser Temperatur zersetzen sich Dioxine und Furane zu ungefährlichen Produkten, so daß der Aktivkoks nach der Regenerationsstufe 25 im Kreislauf wieder zur erneuten Beladung dem Adsorber 24 zugeführt werden kann. Das in der Regenerationsstufe 25 entstehende Reichgas, das im wesentlichen SO₂ und Quecksilber enthält, wird einer Reichgaswäsche 26 unterzogen, wodurch das SO₂ von dem Quecksilber getrennt wird. Das Quecksilber wird in der Reichgaswäsche als Wertstoff zurückgewonnen, und das SO₂ der Schwefelsäureanlage zugeführt.

Das durch den Adsorber 24 wandernde vorgereinigte Gas enthält im wesentlichen nur noch HCl-, SO₂- und NOₓ-Anteile. In einer Waschstufe 27 wird Salzsäure ausgewaschen und als Zwischenprodukt eine HCl-Dünnsäure gewonnen, die in einem Behälter 28 zwischengelagert wird. Aus ihr kann beispielsweise eine verkaufsfähige 30 %ige Salzsäure hergestellt werden. Alternativ hierzu kann die produzierte HCl-Dünnsäure auch der Neutralisationsstufe 22 zugeleitet werden, um nach einer Neutralisation mit Natronlauge (NaOH) zu einer Chloridsalzsole verarbeitet zu werden.

Nach der Waschstufe 27 enthält das Abgas im wesentlichen nur noch SO₂- und NOₓ-Anteile. In einem bekannten Verfahren wird aus dem SO₂ in einer Herstellungsstufe 29 H₂SO₄ hergestellt, beispielsweise nach dem "Fattinger-Verfahren", wie es beispielsweise in EP 0 553 337 B2 beschrieben ist. Das nunmehr gereinigte Abgas wird über einen Kamin ins Freie geleitet. Bei der erfindungsgemäßen Anlagenkonfiguration erübrigt sich der Einsatz einer Entstickungsanlage. Da in dem Fattinger-Stickstoff-Schwefelsäureverfahren verfahrensbedingt geringe Mengen an Salpetersäure benötigt werden, vermindert sich der Einsatz dieser Säure entsprechend der in dem Abgas enthaltenen NOₓ-Menge.

Der im Abhitzekessel 18 erzeugte Dampf wird zusammen mit aus dem Schmelzreaktor 16 über eine Verdampfungskühlung gewonnenen Dampf unter Verwertung der Abwärme des Schmelzreaktors 16 mit einer Dampfturbine 30 zur Stromerzeugung verwendet.

Das erfindungsgemäße Verfahren führt somit zur Herstellung von unschädlichem Granulat, das beispielsweise im Straßenbau verwendet werden kann, sowie zu verkaufsfähigen Produkten, insbesondere einer Schwefelsäure, Salzsäure oder Sole und Quecksilber als Wertstoffe. Darüber hinaus wird gereinigtes Gas ins Freie geleitet und verwertbare Energie in Form von Strom erzeugt.

Das beschriebene Verfahren ist besonders vorteilhaft, weil nicht nur das Problem der Resh-Verwertung gelöst ist sondern zugleich die Beseitigung von hochtoxischen KVA-Filterstäuben und ggf. Stahl-Filterstäuben gelingt, ohne daß hierfür der Verbrauch externer Energien erforderlich ist.

Allerdings kann die Zumischung von Filterstäuben auch entfallen, da das erfindungsgemäße Verfahren natürlich auch zur ausschließlichen Behandlung von Resh geeignet ist. Da dabei keine Überschußenergie von Resh für die Einschmelzung von Filterstäuben verbraucht wird, fällt die bei einer stark reduzierenden Fahrweise des Schmelzreaktors in Form von Synthesegas an.

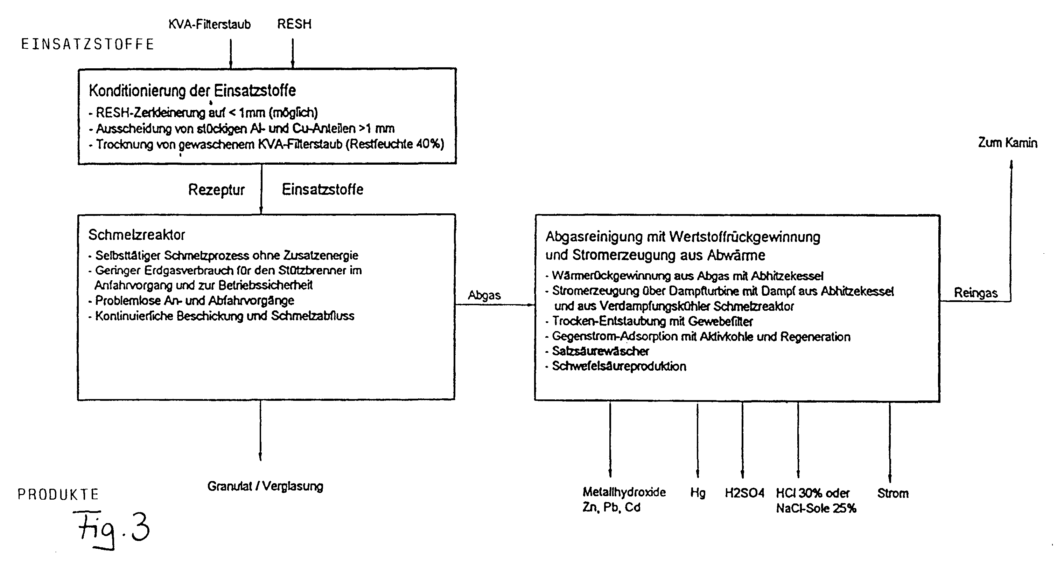

Das in den Figuren 1 und 2 dargestellte Verfahren ist in Figur 3 schematisch nochmals dargestellt und in die großen Bearbeitungsblöcke "Konditionierung der Einsatzstoffe", "Schmelzen" und "Abgasreinigung mit Wertstoffrückgewinnung und Stromerzeugung" unterteilt.

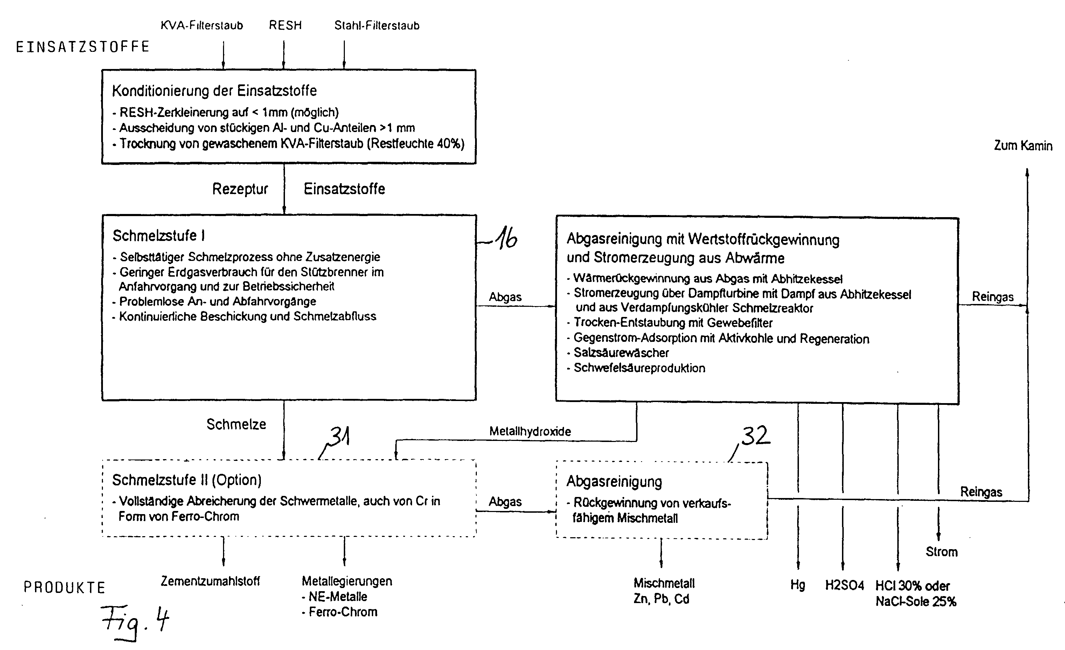

Figur 4 zeigt in einer schematischen Darstellung gemäß Figur 3 eine weitere Ausbaustufe des erfindungsgemäßen Verfahrens, bei der am Ausgang der Schmelzstufe 16 eine weitere Schmelzstufe 31 vorgesehen ist, in die die flüssige Schmelze aus der Schmelzstufe 16 übergeben wird. Sie kann beispielsweise aus einem Reaktor mit einem flüssig gehaltenen Eisenbad bestehen und in bekannter Weise zur Abreicherung der in der flüssigen Schlacke noch enthaltenen restlichen schwerflüchtigen Nichteisenmetalle und ggf. auch von Chrom dienen. Am Ausgang der weiteren Schmelzstufe 31 kann ein Zementzumahlstoff entnommen werden, der Schwermetallspuren nur noch im unteren ppm-Bereich und im übrigen aus Stoffen wie SiO₂, Al₂O₃, CaO o.ä. besteht. Diese Bestandteile sind im Zement ebenfalls enthalten.

In die weitere Schmelzstufe 31 können auch die Metallhydroxide am Ausgang der Filtrationsstufe 21 geleitet werden, um in dem Eisenbadreaktor bei stark reduzierender Fahrweise Zink, Blei und Cadmium in metallischer Form als verkaufsfähiges Mischmetall zurückzugewinnen. Hierzu dient die hinter der zweiten Schmelze vorgesehene Abgasreinigungsstufe 32. Das am Ausgang der Abgasreinigungsstufe 32 anstehende Reingas wird über den bereits erwähnten Kamin mit dem Reingas am Ausgang der Schwefelsäure-Herstellungsstufe 29 ins Freie geleitet.

Die dargestellte zweite Ausbaustufe, die im wesentlichen der Weiterbehandlung im Hinblick auf die Erzeugung von Mischmetall und der Abreicherung der restlichen nichtflüchtigen Schwermetalle aus der flüssigen Schlacke dient, eignet sich insbesondere für die Zumischung von Stahl-Filterstaub zu dem Resh und dem KVA-Filterstaub.

Das erfindungsgemäße Verfahren ist konzipiert für die Verarbeitung von 30.000 t/a Resh und 50.000 t/a Filterstaub und andere Rückstände aus Müllverbrennungsanlagen. Mit dem erfindungsgemäßen Verfahren läßt sich daher in besonders vorteilhafter Weise ein Doppelnutzen erzielen, nämlich die energetisch und stofflich vorteilhafte Verwertung von Resh und Beseitigung von Filterstäuben, die hochtoxisch sind. Selbstverständlich läßt das erfindungsgemäße Verfahren auch Anlagen mit größerer oder kleinerer Kapazität zu.

Für die erfindungsgemäß erforderliche Feinzerkleinerung der Reshbestandteile auf < 2 mm, insbesondere < 1,25 mm, eignet sich ein Prallreaktor, mit dem der Anteil größerer nichtmetallischer Stücke kleingehalten werden kann.

## Patentansprüche

1. Verfahren zur Verwertung von Altautos durch Zerkleinern und thermische Behandlung der Schredder-Leichtfraktion (Resh), **dadurch gekennzeichnet,** daß während oder nach der Zerkleinerung metallische Bestandteile aussortiert werden,
daß eine Feinzerkleinerung der übrigen Stoffe auf eine Länge von etwa 2 mm oder darunter vorgenommen wird und daß die feinzerkleinerten Stoffe in einem Schmelzreaktor (16) durch die inhärente Energie geschmolzen und durch Abkühlung zu einem ungefährlichen Feststoff umgewandelt werden.

2. Verfahren nach Anspruch 1, dadurch gekennzeichnet, daß das Abgas unter Wärmerückgewinnung abgekühlt und anschließend in einem Absorber (24) mit regenerierbarem Absorptionsmaterial zur Produktion verwertbarer Säuren aufbereitet wird.

3. Verfahren nach Anspruch 1 oder 2, dadurch gekennzeichnet, daß aus der Schmelze des Schmelzreaktors (16) ein nicht eluierbares glasartiges Granulat hergestellt wird.

4. Verfahren nach einem der Ansprüche 1 bis 3, dadurch gekennzeichnet, daß dem Resh kohlenstoffarmer Abfallstaub zugemischt wird.

5. Verfahren nach Anspruch 4, dadurch gekennzeichnet, daß der Abfallstaub wenigstens im Gewichtsverhältnis von 1:1 dem Resh zugemischt wird.

6. Verfahren nach einem der Ansprüche 1 bis 5, dadurch gekennzeichnet, daß als Schmelzreaktor (16) ein Schmelzzyklon verwendet wird.

7. Verfahren nach einem der Ansprüche 1 bis 6, dadurch gekennzeichnet, daß der Schmelzreaktor (16) lediglich mit einem Stützbrenner für den Anfahrvorgang und zur Gewährleistung der Betriebssicherheit betrieben wird.

8. Verfahren nach einem der Ansprüche 1 bis 7, dadurch gekennzeichnet, daß der aus dem Schmelzreaktor (16) austretenden Schmelze in einer weiteren Schmelzstufe (31) Schwermetalle entzogen werden und die Schmelze danach zu einem Feststoff umgewandelt wird.

9. Verfahren nach Anspruch 8, dadurch gekennzeichnet, daß der Feststoff gemahlen wird.

10. Verfahren nach Anspruch 8 oder 9, dadurch gekennzeichnet, daß das Abgas der weiteren Schmelzstufe (31) einer Abgasreinigung (32) mit Rückgewinnung von Mischmetallen zugeführt wird.

11. Verfahren nach einem der Ansprüche 2 bis 10, dadurch gekennzeichnet, daß aus den im Abgas des Schmelzreaktors (16) enthaltenen Wertstoffen Salzsäure und Schwefelsäure gewonnen werden.

12. Verfahren nach einem der Ansprüche 2 bis 11, dadurch gekennzeichnet, daß durch Regeneration des Adsorptionsmaterials Dioxine und Furane dissoziiert werden und Quecksilber zurückgewonnen wird.

13. Verfahren nach Anspruch 12, dadurch gekennzeichnet, daß der Adsorber (24) bezüglich des SO₂-Anteils im Abgas im Durchbruchbetrieb gefahren wird.

14. Verfahren nach Anspruch 13, dadurch gekennzeichnet, daß eine Gewinnung von Schwefelsäure aus dem Abgas nach dem Fattinger-Stickoxid-Schwefelsäureverfahren erfolgt, nachdem das Abgas den Absorber (24) durchlaufen hat.

## Claims

1. A method for recycling old cars by comminution and heat treatment of the light shredder fraction (ASR), **characterised in that** metallic components are extracted during or after comminution, in that the remaining materials are finely comminuted to a length of approximately 2 mm or less and in that the finely comminuted materials are melted in a melting reactor (16) through the inherent energy and converted by cooling into a non-hazardous solid.

2. A method according to claim 1, characterised in that the waste gas is cooled by heat recovery and then processed in an absorber (24) with regenerable absorption material for the production of usable acids.

3. A method according to claim 1 or claim 2, characterised in that non-elutable glass-like pellets are produced from the melt in the melting reactor (16).

4. A method according to one of claims 1 to 3, characterised in that low-carbon waste dust is admixed with the ASR.

5. A method according to claim 4, characterised in that the waste dust is admixed with the ASR in a weight ratio of at least 1:1.

6. A method according to one of claims 1 to 5, characterised in that a melting cyclone is used as the melting reactor (16).

7. A method according to one of claims 1 to 6, characterised in that the melting reactor (16) is operated merely with an ancillary burner for the start-up process and to ensure operating reliability.

8. A method according to one of claims 1 to 7, characterised in that heavy metals are removed in a further melting stage (31) from the melt leaving the melting reactor (16) and the melt is then converted into a solid.

9. A method according to claim 8, characterised in that the solid is ground.

10. A method according to claim 8 or claim 9, characterised in that the waste gas from the further melting stage (31) is fed to waste gas cleaning (32) with recovery of mixed metals.

11. A method according to one of claims 2 to 10, characterised in that hydrochloric acid and sulphuric acid are obtained from the useful materials contained in the waste gas from the melting reactor (16).

12. A method according to one of claims 2 to 11, characterised in that dioxins and furans are dissociated and mercury is recovered through regeneration of the absorption material.

13. A method according to claim 12, characterised in that the absorber (24) is run in breakthrough operation with regard to the SO₂ content in the waste gas.

14. A method according to claim 13, characterised in that sulphuric acid is obtained from the waste gas by the Fattinger nitrogen oxide/sulphuric acid process, after the waste gas has passed through the absorber (24).

## Revendications

1. Procédé pour revaloriser des automobiles usagées par fragmentation et traitement thermique de la fraction légère (RESH) issue de la machine (« shredder »), caractérisé en ce que pendant ou après la fragmentation les composants métalliques sont triés,
en ce qu'on procède à une fragmentation fine des autres matériaux à une longueur d'environ 2 mm ou moins, en ce que les matériaux finement fragmentés sont fondus dans un réacteur de fusion (16) par l'énergie inhérente et transformés en un matériau solide inoffensif par refroidissement.

2. Procédé selon la revendication 1, caractérisé en ce que l'effluent gazeux est refroidi avec récupération de la chaleur puis traité dans un absorbeur (24) avec du matériau d'absorption régénérable pour produire des acides exploitables.

3. Procédé selon la revendication 1 ou 2, caractérisé en ce qu' à partir du bain du réacteur de fusion (16) on fabrique un granulat du genre verre, non susceptible d'élution.

4. Procédé selon l'une des revendications 1 à 3, caractérisé en ce qu'on mélange avec le RESH un déchet poussiéreux pauvre en carbone.

5. Procédé selon la revendication 4, caractérisé en ce qu'on mélange le déchet poussiéreux dans une proportion pondérale d'au moins 1 : 1 avec le RESH.

6. Procédé selon l'une des revendications 1 à 5, caractérisé en ce qu'on utilise comme réacteur de fusion (16) un cyclone de fusion.

7. Procédé selon l'une des revendications 1 à 6, caractérisé en ce qu'on fait fonctionner le réacteur de fusion (16) seulement avec un brûleur d'appoint pour le démarrage et pour assurer la sécurité de fonctionnement.

8. Procédé selon l'une des revendications 1 à 7, caractérisé en ce que du bain sortant du réacteur de fusion (16) on retire des métaux lourds dans un autre étage de fusion (31) puis le bain est transformé en un matériau solide.

9. Procédé selon la revendication 8, caractérisé en ce qu'on broie le matériau solide.

10. Procédé selon la revendication 8 ou 9, caractérisé en ce que l'effluent gazeux de l'autre étage de fusion (31) est conduit à une épuration des effluents (32), avec récupération de métaux de mélange (mischmétaux).

11. Procédé selon l'une des revendications 2 à 10, caractérisé en ce qu'on produit de l'acide chlorhydrique et de l'acide sulfurique à partir des matériaux contenus dans l'effluent gazeux du réacteur de fusion (16).

12. Procédé selon l'une des revendications 2 à 11, caractérisé en ce que par régénération du matériau d'adsorption, on dissocie de la dioxine et du furanne, et on récupère du mercure.

13. Procédé selon la revendication 12, caractérisé en ce qu'on fait fonctionner l'adsorbeur (24) en fonctionnement intermittent en relation avec la part de SO₂ dans l'effluent gazeux.

14. Procédé selon la revendication 13, caractérisé en ce qu'il y a production d'acide sulfurique à partir de l'effluent gazeux selon le procédé FATTINGER - oxyde d'azote - acide sulfurique après que l'effluent gazeux a traversé l'absorbeur (24).
